# EUROPÄISCHE PATENTANMELDUNG

(11) **EP 0 794 605 A2**
(43) Veröffentlichungstag der Anmeldung: **10.09.1997**
(21) Anmeldenummer: 97102784.2
(22) Anmeldetag: 20.02.1997
(51) Int. Cl.: H02J 7/10

(54) **Ladeschaltung**

(30) Priorität: 08.03.1996 DE 19609140
(71) Anmelder: NOKIA MOBILE PHONES LTD., 24101 Salo (FI)
(72) Erfinder: Scharff, Christian, 45276 Essen (DE)
(74) Vertreter: TER MEER STEINMEISTER & PARTNER GbR

(57) **Zusammenfassung**

Die vorliegende Erfindung betrifft eine Ladeschaltung zum Laden von Akkumulatoren, bei der zur Überwachung des Ladevorgangs eine Strommessung in der Leitung zum Akkumulator hin vorgenommen wird. Damit zur Erzeugung einer Referenzspannung intern keine Spannungsverdopplung durchgeführt werden muß, wird dem Ausgangsstrom ein kleiner konstanter Strom zur Erzeugung der Referenzspannung entnommen. Zum Start des Ladevorgangs oder zur Wiederherstellung einer normalen kontrollierten Ladung nach einem Kurzschluß ist eine Teilschaltung vorhanden, die gewährleistet, daß immer ein kleiner konstanter Strom zur Erzeugung der Referenzspannung fließt.

## Beschreibung

Die vorliegende Erfindung betrifft allgemein eine Ladeschaltung zum Laden von Akkumulatoren und im speziellen eine solche Ladeschaltung, die zur Überwachung des Ladevorgangs eine Strommessung in der Leitung zum Akkumulator hin vornimmt.

Mit einer solchen Schaltung wird ein Akkumulator über eine Strommeßschaltung geladen, die eine vom Ladestrom abhängige Meßspannung erzeugt. Diese Meßspannung wird an einen Spannungsvergleicher geführt, der sie mit einer Referenzspannung vergleicht und in Übereinstimmung mit dem Vergleichsergebnis ein Schaltelement ansteuert, das wiederum den Ladestrom zur Ladung des Akkumulators ein- und ausschaltet. Eine solche Beschränkung auf die Strommessung in der Hinleitung ist bei vielen Ladegeräten aus bestimmten Gründen vorgeschrieben. Bei der Erzeugung der vom Ladestrom abhängigen Meßspannung in der Hinleitung besteht allerdings ein Problem darin, daß der Spannungspegel der Meßspannung abhängig von der am Akkumulator anliegenden Spannung ist.

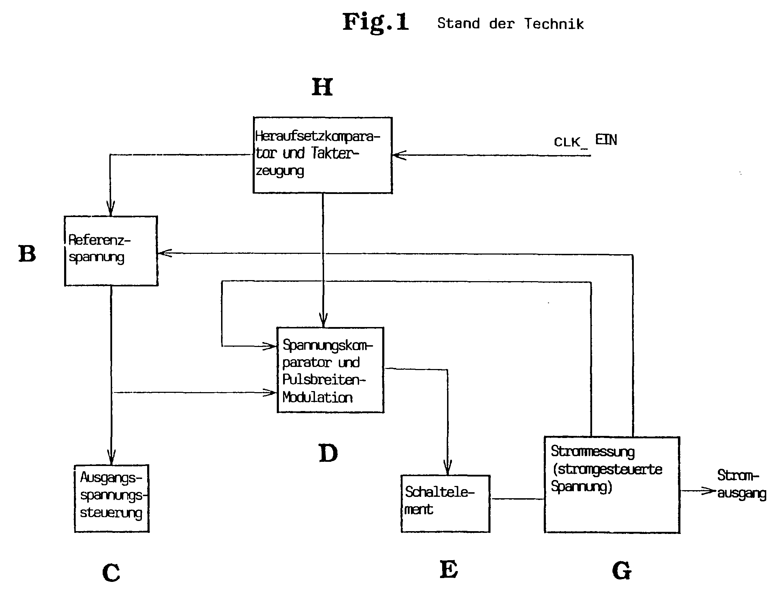

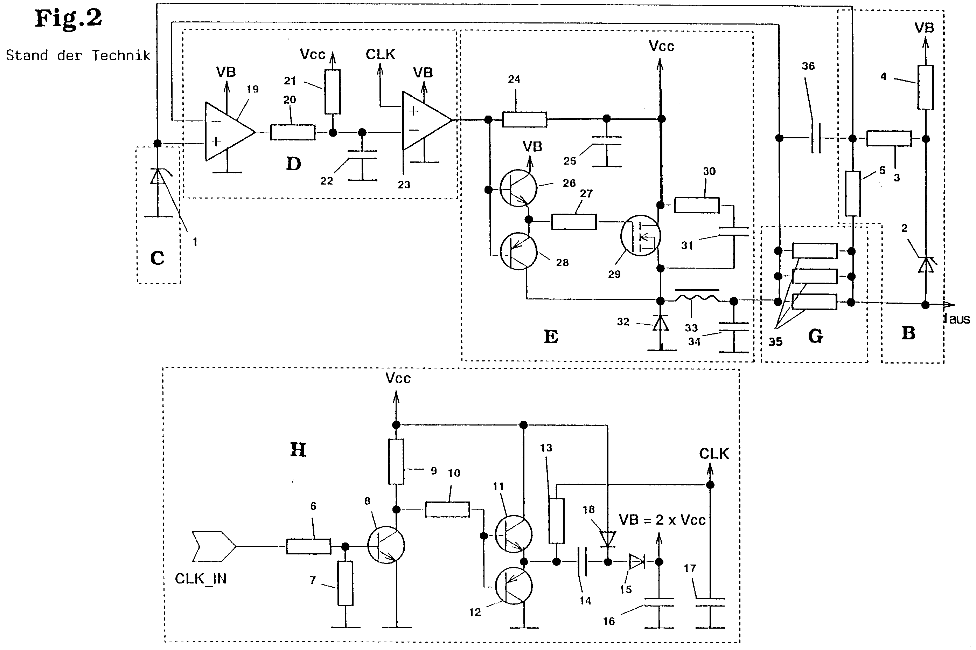

Nach dem Stand der Technik gemäß den Figuren 1 und 2 wird die vom Ladestrom abhängige Meßspannung durch drei parallel geschaltete Widerstände 35 im Schaltungsblock G erzeugt. Die zum Spannungsvergleich notwendige Referenzspannung wird im Schaltungsblock B von zwei Widerständen 3 und 5 sowie einer Zenerdiode 2 erzeugt. Durch die Zenerdiode 2 wird eine Spannung geliefert, die einen Strom durch die Widerstände 3 und 5 treibt. Dieser Strom ruft am Widerstand 5 einen Spannungsabfall hervor, der als Referenzspannung dient. Damit die Zenerdiode 2 die Spannung liefern kann, wird sie selbst über einen Widerstand 4 mit einer Spannung VB versorgt, die um einiges größer sein muß als die Ausgangsspannung der Ladespannung selbst. Da die Versorgungsspannung Vcc der Ladeschaltung zwischen 10,8 Volt und 20 Volt liegen soll und ihre Ausgangsspannung zwischen 0 Volt und 10,8 Volt, wird zur Gewährleistung einer Spannung VB größer als die Ausgangsspannung der Ladeschaltung in einem Schaltungsblock H zur Erzeugung der Spannung VB eine Verdopplung der Versorgungsspannung Vcc vorgenommen. Für eine solche Spannungsverdopplung benötigt die Ladeschaltung ein Taktsignal und eben den Schaltungsblock H, der kompliziert aufgebaut ist.

Es ist deshalb die Aufgabe der vorliegenden Erfindung, eine Ladeschaltung zu schaffen, die ohne eine Spannungsverdopplung auskommt und dennoch den Strom zur Ladeüberwachung in dem Zweig zum Akkumulator hin mißt.

Eine Lösung der gestellten Aufgabe ist im Anspruch 1 angegeben. Vorteilhafte Weiterbildungen sind den Unteransprüchen zu entnehmen.

Eine erfindungsgemäße Ladeschaltung zum Laden eines Akkumulators über eine Strommeßschaltung, die eine vom Ladestrom abhängige Meßspannung erzeugt, die an einen Spannungsvergleicher geführt wird, der die von der Strommeßschaltung erzeugte Meßspannung mit einer Referenzspannung vergleicht und in Übereinstimmung mit dem Vergleichsergebnis ein Schaltelement ansteuert, das den Ladestrom zur Ladung des Akkumulators ein- und ausschaltet, ist dadurch gekennzeichnet, daß die Ladeschaltung einen Referenzstrom zur Erzeugung der Referenzspannung mit einem Strom-Spannungswandler aus ihrem Ausgangszweig entnimmt.

Diese Lösung, nämlich zur Erzeugung der Referenzspannung einen Referenzstrom aus dem Ausgangszweig der Ladeschaltung selbst zu entnehmen, führt dazu, daß zur Erzeugung der Referenzspannung keine Spannung mehr zur Verfügung stehen muß, die größer als die Ausgangsspannung der Ladeschaltung selbst ist und deshalb keine Spannungsverdopplung mehr benötigt wird. Somit kann der im Stand der Technik erforderliche kompliziert aufgebaute Schaltungsblock H zur Spannungsverdopplung in einer Ladeschaltung nach der Erfindung entfallen. Dies führt zu einer Schaltung, die mit einer sehr geringen Anzahl von Bauelementen auskommt.

Eine vorteilhafte Weiterbildung einer erfindungsgemäßen Ladeschaltung ist durch eine Stromsenke gekennzeichnet, die den Referenzstrom auf eine bestimmte Stromstärke einstellt.

Durch eine solche Stromsenke wird dem Ausgangszweig der Ladeschaltung ein konstanter Strom zur Erzeugung der Referenzspannung entnommen. Dadurch ist gewährleistet, daß die Referenzspannung und somit auch der Ladestrom zum Laden des Akkumulators konstant bleiben.

Eine weitere vorteilhafte Ausgestaltung der Erfindung ist dadurch gekennzeichnet, daß mittels der Stromsenke der Referenzstrom veränderbar ist.

Der Vorteil eines veränderbaren Referenzstroms liegt in der damit verbundenen Änderung der Referenzspannung, die eine Änderung des Ladestroms zum Laden des Akkumulators zur Folge hat. So kann mit relativ einfachen Mitteln der Ladestrom an verschiedene Akkumulatoren angepaßt werden.

Eine andere vorteilhafte Ausgestaltung der vorliegenden Erfindung ist dadurch gekennzeichnet, daß die Strommeßschaltung ein Impedanzelement oder parallel geschaltete Impedanzelemente aufweist, worüber jeweils die Meßspannung abfällt.

Der Vorteil einer Verwendung von handelsüblichen Impedanzelementen mit einer hohen Genauigkeit (1%) liegt darin, daß mit preiswerten Mitteln eine genaue Umwandlung des Ladestroms in eine Meßspannung, die über den Impedanzelementen abfällt, gewährleistet ist.

Eine noch weitere vorteilhafte Ausgestaltung der Erfindung ist dadurch gekennzeichnet, daß die durch die Stromsenke erzeugte Referenzspannung vor den Impedanzelementen und die Meßspannung dahinter gemessen werden.

Der Vorteil dieser Ausgestaltung liegt darin, daß einerseits kein Meßfehler mehr auftritt, und daß andererseits jetzt das Potential am positiven Eingang des Differenzverstärkers geringer ist, als wenn die Anordnung anders herum getroffen wird. Dadurch ist es möglich, daß die minimale Versorgungsspannung des Differenzverstärkers mit der maximalen Ausgangsspannung der Ladeschaltung übereinstimmen kann, also zur Versorgung des Differenzverstärkers nicht über die maximale Ausgangsspannung hinaus erhöht zu werden braucht.

Eine nächste vorteilhafte Ausgestaltung einer Ladeschaltung nach der Erfindung ist durch eine Startschaltung gekennzeichnet, die ständig einen geringen Strom zum Ausgangszweig der Ladeschaltung liefert.

Diese Ausgestaltung ist besonders hilfreich, da ohne die Startschaltung eine Rückkehr aus dem Kurzschlußzustand in den Betriebszustand nicht mehr möglich wäre. Dies liegt daran, daß ohne einen Ladestrom in der erfindungsgemäßen Schaltung dem Ausgangszweig auch kein Referenzstrom zur Erzeugung einer Referenzspannung entnommen werden kann. Dadurch wird auch keine Meßspannung mehr erzeugt, so daß also kein neuer Vergleich stattfinden und das Schaltelement nicht erneut angesteuert werden kann.

Schließlich liegt eine vorteilhafte Ausgestaltung der Ladeschaltung nach der Erfindung darin, daß die Startschaltung mit dem Ausgangszweig zwischen dem Schaltelement und der Strommeßschaltung verbunden ist.

Durch diese Möglichkeit der Anordnung wird eine besonders einfache Ausführung der Startschaltung erhalten, die nur einen kleinen begrenzten Stromfluß durch den Ausgangszweig aufrechtzuerhalten braucht, damit nach einem Kurzschluß (und evtl. auch bei Beginn eines Ladevorgangs nach dem Anschließen eines Akkumulators) der Ladevorgang wieder initiiert wird.

Weitere Merkmale und Kennzeichen der vorliegenden Erfindung werden durch das nachfolgend beschriebene Ausführungsbeispiel im Zusammenhang mit den beigefügten Figuren verdeutlicht. Es zeigen:
- **Fig. 1**: ein Blockschaltbild einer Ladeschaltung nach dem Stand der Technik,
- **Fig. 2**: einen Schaltplan der Ladeschaltung nach dem Stand der Technik,
- **Fig. 3**: ein Blockschaltbild einer Ladeschaltung nach der Erfindung,
- **Fig. 4**: einen Schaltplan der Ladeschaltung nach der Erfindung,
- **Fig. 5**: die Kennlinie des Ausgangsstroms in Abhängigkeit von der Ausgangsspannung für die Ladeschaltung nach dem Stand der Technik, und
- **Fig. 6**: die Kennlinie des Ausgangsstroms in Abhängigkeit von der Ausgangsspannung für die Ladeschaltung nach der Erfindung.

In den Blockschaltbildern und Schaltplänen sind Schaltungsblöcke mit gleichen oder ähnlichen Funktionen mit den gleichen Referenzzeichen versehen.

Die Figur 1 zeigt ein Blockschaltbild einer Ladeschaltung nach dem Stand der Technik. Hier wird in einem Schaltungsblock H die Versorgungsspannung mit Hilfe eines daran anzulegenden Taktsignals CLK_IN verdoppelt. Diese verdoppelte Versorgungsspannung wird in dem Schaltungsblock B zur Erzeugung einer Referenzspannung benutzt und auch zur Versorgung der Spannungsvergleicher. Weiterhin wird im Schaltungsblock H einTaktsignal abgezweigt und an den Schaltungsblock D geführt, in dem sich ein Spannungsvergleicher und eine Stufe zur Pulsweiten-Modulation befinden. Der von der Ladeschaltung zum Laden des Akkumulators erzeugte Strom wird im Schaltungsblock G zur Messung aufbereitet, indem dort eine vom Ladestrom abhängige Spannung erzeugt wird. Diese Spannung wird zum Schaltungsblock D an den Spannungsvergleicher geführt. Vom Schaltungsblock G existiert eine Verbindung zum Schaltungsblock B, in dem die Referenzspannung erzeugt wird, damit diese auf den Pegel der Ausgangsspannung angehoben wird. Die Referenzspannung wird an einen Ausgangsspannungsbegrenzer im Schaltungsblock C und an den Spannungsvergleicher im Schaltungsblock D geführt. Der Spannungsvergleicher vergleicht die Referenzspannung mit der Meßspannung und verkleinert, wenn die Meßspannung größer als die Referenzspannung ist, die Pulsweite für ein Schaltelement im Schaltungsblock E, und vergrößert die Pulsweite, wenn die Meßspannung kleiner als die Referenzspannung ist. Durch dieses Schaltelement wird im Schaltungsblock E jeweils der Ladestrom aus- bzw. eingeschaltet.

Die Figur 2 zeigt das zur Figur 1 gehörende Schaltbild. Auch hier sind die in der Figur 1 vorhandenen Schaltungsblöcke eingezeichnet und mit den gleichen Referenzzeichen versehen.

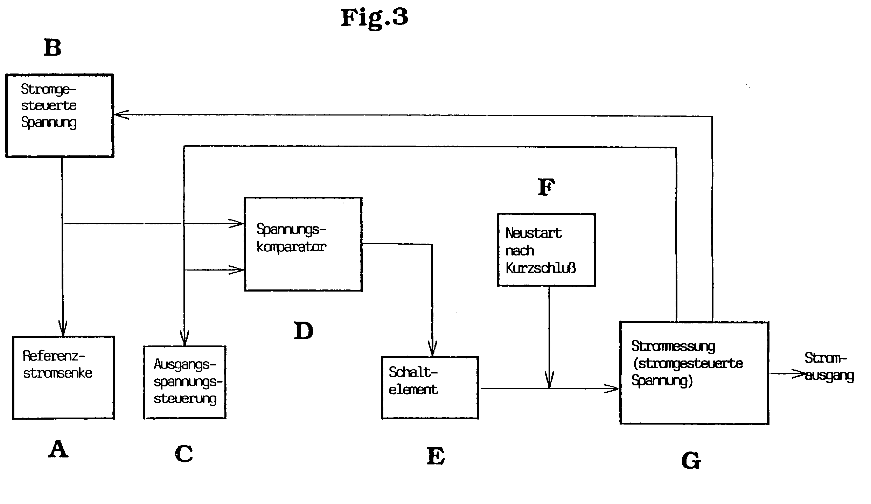

Die Figur 3 zeigt ein Blockschaltbild einer Ladeschaltung nach der Erfindung. Schaltungsblöcke, die eine gleiche oder ähnliche Funktion wie die Schaltungsblöcke einer Ladeschaltung nach dem Stand der Technik haben, sind mit den gleichen Referenzzeichen versehen. Auch hier wird der Ladestrom durch ein Schaltelement im Schaltungsblock E ein- bzw. ausgeschaltet. Dieser Ladestrom wird wie im Stand der Technik zur Messung aufbereitet, indem im Schaltungsblock G eine vom Ladestrom abhängige Meßspannung erzeugt wird. Diese vom Ladestrom abhängige Meßspannung wird an einen Spannungsvergleicher im Schaltungsblock D und an einen Ausgangsspannungsbegrenzer im Schaltungsblock C geführt. Mittels einer Referenzstromsenke im Schaltungsblock A wird von dem Ausgangsstrom ein kleiner Strom abgezweigt, mit dem im Schaltungsblock B eine von diesem Strom abhängige Referenzspannung erzeugt wird. Diese Referenzspannung wird auch an den Spannungsvergleicher im Spannungsblock D geführt. Der Spannungsvergleicher steuert bei einer Meßspannung größer als die Referenzspannung das Schaltelement im Schaltungsblock E so an, daß es den Ladestrom ausschaltet, und bei einer Meßspannung kleiner als die Referenzspannung so, daß es den Ladestrom einschaltet. Damit nach einem Kurzschluß die Schaltung aus dem Zustand, in dem der Ladestrom ausgeschaltet ist, wieder in den normalen Betriebszustand versetzt wird, in dem ständig entschieden wird, ob der Ladestrom ein- oder ausgeschaltet werden soll, ist ein Schaltungsblock F mit dem Zweig zwischen dem Schaltelement im Schaltungsblock E und dem Akkumulator verbunden.

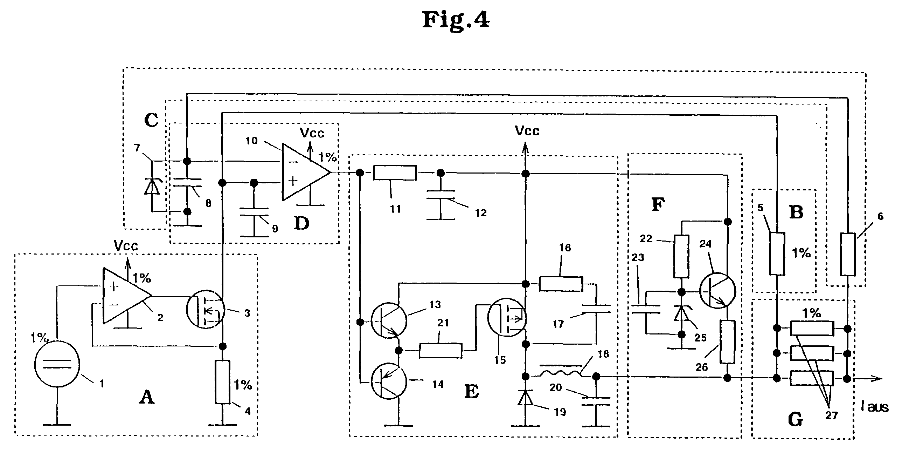

Die Figur 4 zeigt das zur Figur 3 gehörende Schaltbild einer erfindungsgemäßen Ladeschaltung. Auch hier sind die Schaltungsblöcke mit eingezeichnet und mit den gleichen Referenzsymbolen versehen wie im Blockschaltbild der Figur 3. Die Referenzstromsenke im Schaltungsblock A ist mittels eines Differenzverstärkers 2 gebildet, an dessen positiven Eingang eine genaue Konstantspannung angelegt wird, die mit einem handelsüblichen Bauteil 1 der Genauigkeits-Klasse 1% erzeugt werden kann. Der zweite Anschluß des Konstantspannungsbauteils 1 liegt auf Masse. Der negative Eingang des Differenzverstärkers 2 ist mit dem Source-Anschluß eines N-FETs 3 verbunden, dessen Gate-Anschluß an den Ausgang des Differenzverstärkers 2 angeschlossen ist. Der Source-Anschluß des N-FETs 3 ist weiterhin über einen Widerstand 4, der auch aus einer Reihenschaltung mehrerer Widerstände bestehen kann, an Masse angeschlossen. Der Drain-Anschluß des N-FETs 3 ist über einen Widerstand 5 im Schaltungblock B an den zwischen dem Schaltungsblock E und dem Akkumulator liegenden Ausgangszweig der Ladeschaltung vor den Meßwiderständen 27 des Schaltungsblocks G angeschlossen. Der positive Eingang eines Differenzverstärkers 10 im Schaltungsblock D ist an den Eingang des Widerstand 5 angeschlossen, an den auch der Drain-Anschluß des N-FETs 3 angeschlossen ist. Der positive Eingang des Differenzverstärkers 10 ist weiterhin über einen Kondensator 9 an Masse angeschlossen. Der negative Eingang des Differenzverstärkers 10 ist über einen Widerstand 6 an den Ausgang der Ladeschaltung hinter den Meßwiderständen 27 des Schaltungsblocks G angeschlossen. Dieser negative Eingang ist weiterhin über einen Kondensator 8 an Masse angeschlossen. Parallel zu diesem Kondensator 8 ist eine Zenerdiode 7 mit ihrer Kathode an Masse und ihrer Anode an den negativen Eingang des Differenzverstärkers 10 bzw. über den Widerstand 6 an den Ausgang der Ladeschaltung angeschlossen. Der Ausgang des Differenzverstärkers 10 ist an die jeweilige Basis eines NPN-Transistors 13 und eines PNP-Transistors 14 angeschlossen. Diese beiden Transistoren bilden eine Push/Pull-Stufe zur Ansteuerung eines P-FETs 15, der den Ladestrom zum Laden des Akkumulators ein- und ausschaltet. Dazu ist der Emitter des NPN-Transistors 13 mit dem Emitter des PNP-Transistors 14 verbunden und diese beiden Emitter sind gemeinsam über einen Widerstand 21 mit dem Gate-Anschluß des P-FETs 15 verbunden. Der Kollektoranschluß des NPN-Transistors 13 ist an die Versorgungsspannung Vcc angeschlossen und der Kollektor des PNP-Transistors 14 ist an Masse angeschlossen. Die beiden zusammengeschlossenen Basisanschlüsse der Transistoren 13 und 14 sind weiter über einen Widerstand 11 an die Versorgungsspannung Vcc angeschlossen. Zwischen die Versorgungsspannung Vcc und Masse ist ein Kondensator 12 geschaltet. Der P-FET 15 ist mit seinem Drain-Anschluß an die Versorgungsspannung Vcc angeschlossen und mit seinem Source-Anschluß über ein Diode 19 an Masse, wobei die Anode der Diode 19 an Masse und die Kathode an den Source-Anschluß des P-FETs 15 angeschlossen ist. Zwischen dem Drain- und dem Source-Anschluß des P-FETs 15 befindet sich eine Reihenschaltung aus einem Widerstand 16 und einem Kondensator 17, wobei der Widerstand an den Drain-Anschluß und der Kondensator an den Source-Anschluß angeschlossen ist. Im Ausgangszweig der Ladeschaltung befindet sich zwischen dem Source-Anschluß des P-FETs 15 und den Meßwiderständen 27 im Schaltungsblock G, die im Ausgangszweig direkt vor dem Akkumulator angeordnet sind, eine Spule 18 zur Glättung des Ausgangsstroms. Der Schaltungsblock G kann aus einem in den Ausgangszweig geschalteten Widerstand 27 oder aus einer Parallelschaltung von mehreren in den Ausgangszweig geschalteten Widerständen 27 bestehen. Hinter der Spule 18 ist der Ausgangszweig der Ladeschaltung über einen Kondensator 20 an Masse angeschlossen. Weiterhin ist an den Ausgangszweig der Ladeschaltung vor den Meßwiderständen 27 des Schaltungsblocks G und hinter der Spule 18 ein NPN-Transistor 24 mit seinem Emitter über einen Widerstand 26 angeschlossen. Der Kollektor des NPN-Transistors 24 ist an die Versorgungsspannung angeschlossen. Zwischen dem Kollektor des NPN-Transistors 24 und dessen Basis befindet sich ein Widerstand 22. Zwischen die Basis und Masse ist eine Zenerdiode 25 geschaltet, die mit ihrer Kathode an Masse und ihrer Anode an die Basis des NPN-Transistors 24 angeschlossen ist. Parallel zu dieser Zenerdiode 25 liegt ein Kondensator 23.

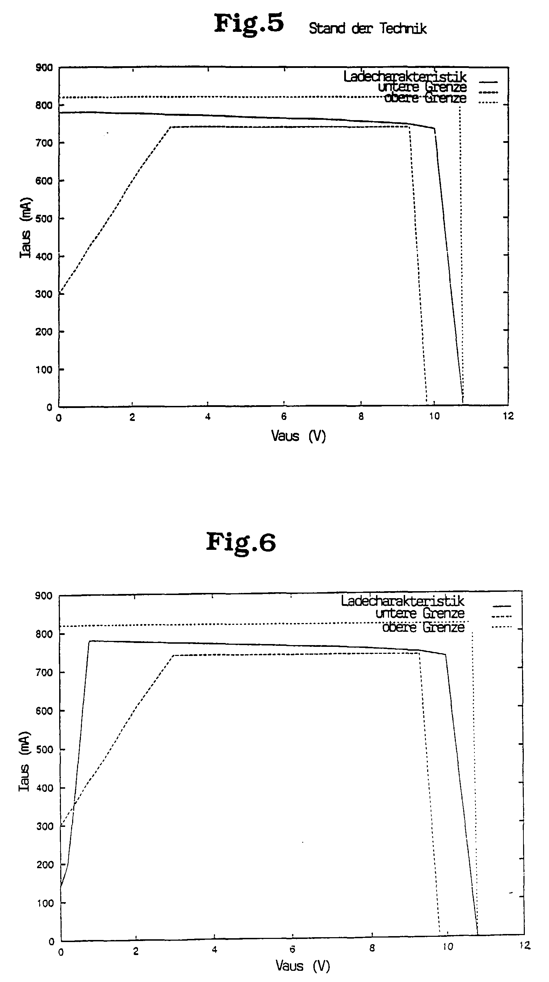

Die Funktion dieser Schaltung ergibt sich wie folgt. Die Referenzstromsenke im Block A entzieht dem Ausgangszweig der Ladeschaltung vor den Strommeßwiderständen 27 einen kleinen Strom. Durch diesen Strom fällt am Widerstand 5 des Schaltungsblocks B eine Spannung ab. Diese Spannung ist die Referenzspannung. Durch den aus der Ladeschaltung herausfließenden Strom Iout, der durch die Meßwiderstände 27 fließen muß, fällt an diesen Meßwiderständen 27 eine Meßspannung ab. Diese beiden Spannungen (die Referenzspannung und die Meßspannung) werden an die Eingänge des Differerzverstärkers 10 gelegt. Ist die Referenzspannung kleiner als die Meßspannung, so schaltet der Differenzverstärker 10 über die Push/Pull-Stufe aus den Transistoren 13 und 14 den P-FET 15 aus und dieser unterbricht den Fluß des Ladestroms. Ist umgekehrt die Referenzspannung größer als die Meßspannung, so wird wieder von dem Differenzverstärker 10 über die Push/Pull-Stufe aus den Transistoren 13 und 14 der P-FET 15 eingeschaltet und somit ein Stromfluß aus der Ladeschaltung heraus hergestellt. Bedingt durch eine schnelle Schaltfolge (zwischen 20 kHz und 700 kHz) und durch die Elemente 18 bis 20 wird aus dem rechteckförmigen Stromverlauf eine Gleichspannung mit einer Restwelligkeit kleiner 100 mVpp erzeugt. Die Frequenz der Schaltfolge kann mittels der Kondensatoren 8 und 9 eingestellt werden, die jeweils zwischen einem der Eingänge des Differenzverstärkers 10 und Masse liegen. Der Widerstand 16 und der Kondensator 17 sind zwischen den Drain-Anschluß und den Source-Anschluß des P-FETs 15 geschaltet, damit dessen Schaltverhalten verbessert wird und er sich dadurch weniger erwärmt. Mittels der Elemente 22 bis 26 wird an den Ausgangszweig der Ladeschaltung eine zusätzliche Spannung angelegt. Durch diese zusätzliche Spannung wird das Ausgangspotential, zum Beispiel nach der Beendigung eines Kurzschlusses, soweit angehoben, daß der Referenzstrom zur Erzeugung der Referenzspannung wieder fließen kann und dadurch die Strombegrenzerschaltung wieder in die Lage versetzt wird, den Ausgangsstrom zu steuern. Die Figuren 5 und 6 zeigen die Charakteristika des Ausgangsstroms in Abhängigkeit von der Ausgangsspannung der Ladeschaltung nach dem Stand der Technik und der erfindungsgemäßen Ladeschaltung. Es ist deutlich zu erkennen, daß die beiden Schaltungen im relevanten Bereich einer Ausgangsspannung größer 1,0 Volt die gleichen Ausgangskennlinien haben. Der Unterschied im Bereich kleiner 1,0 Volt ist dadurch bedingt, daß bei der erfindungsgemäßen Ladeschaltung hier keine korrekte Steuerung des Ausgangsstroms vorliegt, da in diesem Bereich nur ein durch den Schaltungsblock F erzeugter Strom fließt und der P-FET 15 im Schaltungsblock E ausgeschaltet bleibt. Dieses Verhalten kommt also daher, daß zur Erzeugung der Referenzspannung keine eigene Stromversorgung vorhanden ist, sondern der Referenzstrom dem Ausgangszweig der Ladeschaltung selbst entnommen wird. Dafür braucht aber auch in der erfindungsgemäßen Ladeschaltung keine Schaltung zur Spannungsverdopplung vorhanden zu sein.

Die nach der Erfindung aufgebaute Ladeschaltung dient dem schnellen Laden von NI-Cd Akkumulatoren in Mobiltelefonen. Sie erfüllt die folgenden Bedingungen:
- Versorgungsspannung des Chargers 10.8 V bis 20 V
- Ausgangsspannung: 0 V bis 10.8 V max.
- Konstanter Ausgangsstrom bis 1 A (5% Toleranz erlaubt)
- Restwelligkeit < 100 mVpp
- Strommessung in der Hinleitung
- Einfacher Aufbau
- Hohe Zuverlässigkeit
- Geringe Erwärumung der Bauteile im Betrieb

Eine solche Ladeschaltung kann natürlich nicht nur für das Laden von Akkumulatoren in Mobiltelefonen benutzt werden, sie kann vielmehr in jedem anderen Gerät verwendet werden, das mit Akkumulatoren arbeitet, die mit einem konstanten Strom geladen werden sollen. Auch die Verwendung als externes Ladegerät ist natürlich möglich.

## Patentansprüche

1. Ladeschaltung zum Laden eines Akkumulators über eine Strommeßschaltung (G), die eine vom Ladestrom abhängige Meßspannung erzeugt, die an einen Spannungsvergleicher (D) geführt wird, der die von der Strommeßschaltung (G) erzeugte Meßspannung mit einer Referenzspannung vergleicht und in Übereinstimmung mit dem Vergleichsergebnis ein Schaltelement (E) ansteuert, das den Ladestrom zur Ladung des Akkumulators ein- und ausschaltet, **dadurch gekennzeichnet**, daß die Ladeschaltung einen Referenzsstrom zur Erzeugung der Referenzspannung mit einem Strom-Spannungs-Umsetzer (B) aus ihrem Ausgangszweig entnimmt.

2. Ladeschaltung nach Anspruch 1, **gekennzeichnet durch** eine Stromsenke (A), die den Referenzstrom auf eine bestimmte Stromstärke einstellt.

3. Ladeschaltung nach Anspruch 2, **dadurch gekennzeichnet**, daß die Stromsenke (A) so ausgebildet ist, daß der Referenzstrom veränderbar ist.

4. Ladeschaltung nach Anspruch 1, **dadurch gekennzeichne**t, daß die Strommeßschaltung (G) ein oder mehrere parallel geschaltete Impedanzelemente (27) aufweist, über die jeweils die Meßspannung abfällt.

5. Ladeschaltung nach Anspruch 4, **dadurch gekennzeichnet**, daß die durch die Stromsenke erzeugte Referenzspannung vor dem bzw. den Impedanzelementen (27) und die Meßspannung dahinter gemessen wird.

6. Ladeschaltung nach Anspruch 1, **gekennzeichnet durch** eine Startschaltung (F) zur ständigen Lieferung eines geringen Stromes in den Ausgangszweig.

7. Ladeschaltung nach Anspruch 6, **dadurch gekennzeichnet**, daß die Startschaltung (F) mit dem Ausgangszweig zwischen dem Schaltelement (E) und der Strommeßschaltung (G) verbunden ist.
